# EUROPEAN PATENT APPLICATION

(11) **EP 1 193 194 A1**
(43) Date of publication of application: **03.04.2002**
(21) Application number: 01123589.2
(22) Date of filing: 01.10.2001
(51) Int. Cl.: B65G 1/04, B66F 9/07

(54) **Stacker crane**

(30) Priority: 02.10.2000 JP 2000301705
(71) Applicant: Murata Kikai Kabushiki Kaisha, Minami-ku, Kyoto-shi, Kyoto 601 (JP)
(72) Inventor: Kamide, Satoshi, Gani-shi, Gifu (JP)
(74) Representative: Liedl, Christine, Dipl.-Chem.

(57) **Abstract**

The present invention relates to a stacker crane (2) used in an automatic warehouse or the like comprising a lower cart (4) and an upper cart (5) each provided with a running motor (8, 9) which are synchronized so that the position of the upper and lower cart are to overlap in the vertical direction. A elevating platform (18) is elevated and descended by employing a mast (10) between the carts (4, 5). The mast (10) is attached to the lower cart (4) in the running direction, freely swinging, and is attached to the upper cart (5), freely swinging in the running direction and freely shifting in the lower direction.

The stacker crane, which is high speed and light weighted, wherein an excess force is prevented from being applied even when heightening the mast, can be earned according to the present invention (Fig. 1).

## Description

### Field of the Invention

The present invention relates to improvements of a stacker crane used in an automatic warehouse or the like, and especially to improvements of the stacker crane wherein a running motor is employed to each of an upper cart and a lower cart.

### Background of the Invention

In the conventional stacker crane, running rails are employed in the upper side and the lower side, the entire stacker crane is run by being towed by the running motor employed in the lower cart. Since the entire stacker crane is run by the driving force of the lower cart, the stress to be applied to the connection between the mast and the cart increases, in the case the mast is lengthened, and the speed and the acceleration or deceleration are increased. Therefore, appropriate rigidity is required for the mast, and the weight of the mast is to be increased. Moreover, since the running motor is employed to only the lower cart, there is a limit to the high speed and the high acceleration or high deceleration, and a limit is also to be made to the high rising, etc. of the automatic warehouse.

It is an object of the present invention to provide a stacker crane wherein the high speed running and the high accelerated or high decelerated running or the miniaturizing of the running motor are easy, the mast can be lengthened, and no excess force is to be applied to the connection between the cart and the mast.

It is an additional object of the present invention to further facilitate the high speed and the high accelerated or high decelerated running or the miniaturizing of the running motor, or lengthening the mast, by decreasing the weight of the mast.

It is an additional object of the present invention to damp the vibration between the upper cart and the lower cart.

### Summary of the Invention

According to the present invention, a stacker crane wherein a mast is connected between an upper cart and a lower cart, is characterized in that the stacker crane has a running motor provided to each of the upper cart and the lower cart, the running motors are controlled in synchronism so that the position of the upper cart and the position of the lower cart are to overlap each other along the vertical direction. In addition, the mast is attached to the one of the upper cart and the lower cart, and is capable of swinging in the running direction. The mast is attached to the other cart, and is capable of swinging in the running direction and capable of shifting in the vertical direction.

Preferably, the mast is formed into a truss structured mast.

In addition, preferably, a damper is employed to the connection between the other cart and the mast, and it is especially preferable to employ a damper and a spring.

According to the present invention, the running motor is employed to each of the upper cart and the lower cart, thus, for example, the high speed running or the miniaturizing of the running motors can be carried out. Moreover, the driving force for towing the upper cart is not conveyed to the mast from the lower cart. As a result, the rigidity of the mast can be low and the weight of the stacker crane can be reduced. The upper cart and the lower cart are controlled in synchronism so that the upper cart is to be located directly above the lower cart, and the force between the cart and the mast is basically used only for accelerating or decelerating the mast. The upper cart and the lower cart accelerate or decelerate the mast respectively, and the necessary force is to be used for each cart to accelerate or to decelerate the self-managing part in the mast, thus the output of the running motor can be small.

Generally, it is difficult to carry out the synchronized control perfectly, and when the upper cart and the lower cart no longer overlap in the vertical direction, an excess force is applied to the connection between the cart and the mast. The moment of the force between the cart and the mast increases accordingly with the height of the mast (mast length). Thus, an excess force is applied to the connection between the cart and the mast whenever lengthening the mast. Therefore, according to the present invention, the mast is attached capable of swinging in the running direction, to the upper cart and the lower cart, and the moment of the force acting upon the connection between the upper cart and the lower cart, and the mast can be released by the swinging of the mast. Referring to the one of the upper cart and the lower cart as one of the carts, and the other as the other cart, when connecting the mast in the running direction, capable of swinging, to the cart, the height of the mast changes according to the swinging of the mast. This change can be absorbed by attaching the mast in the vertical direction, capable of shifting, to the other cart.

As a result, according to the present invention, the following effects can be earned for example, the reducing of the weight of the stacker crane, the high speed and the high acceleration or high deceleration, the lengthening of the mast, the miniaturizing of each running motors. However, putting importance to either of these effects is a random matter, and for example, only the high speed and the high acceleration or high deceleration of the stacker crane can be made to be the object, and the increasing of the mast length or the reducing of the weight of the stacker crane can be ignored, or to make possible of the high rising of the automatic warehouse, the reducing of the weight can be ignored and only the enlarging of the mast length of the stacker crane can be made to be the object.

According the present invention, comparing to the case in which running the entire stacker crane by the lower cart, the force in the running direction to be applied to the connection between the mast and the cart during the running, can be reduced. Therefore, according to the invention, the mast is formed in a truss structure, and the weight of the mast is further reduced. Then, if the weight of the mast can be reduced, for example, the speeding up of the stacker crane or the miniaturizing of the running motor can be facilitated.

In the invention, a damper is employed in the connection between the other cart and the mast. The damper absorbs the vibration of the relative position of the upper cart and the lower cart, facilitating the synchronized control of the upper cart and the lower cart.

### Brief Description of the Drawings

Figure 1 is a diagram showing the composition of the stacker crane according to the embodiment of the present invention.
Figure 2 is a diagram showing how the mast is attached to the lower cart in the stacker crane according to the embodiment of the present invention.
Figure 3 is a diagram showing how the mast is attached to the upper cart in the stacker crane according to the embodiment of the present invention.
Figure 4 is a diagram showing the change in the position of the upper edge of the mast in the case the position of the upper cart and the position of the lower cart are imbalanced in the stacker crane according to the embodiment of the present invention.
Figure 5 is a diagram showing the composition of the stacker crane according to the second embodiment of the present invention.

### Detailed Description of the Preferred Embodiments

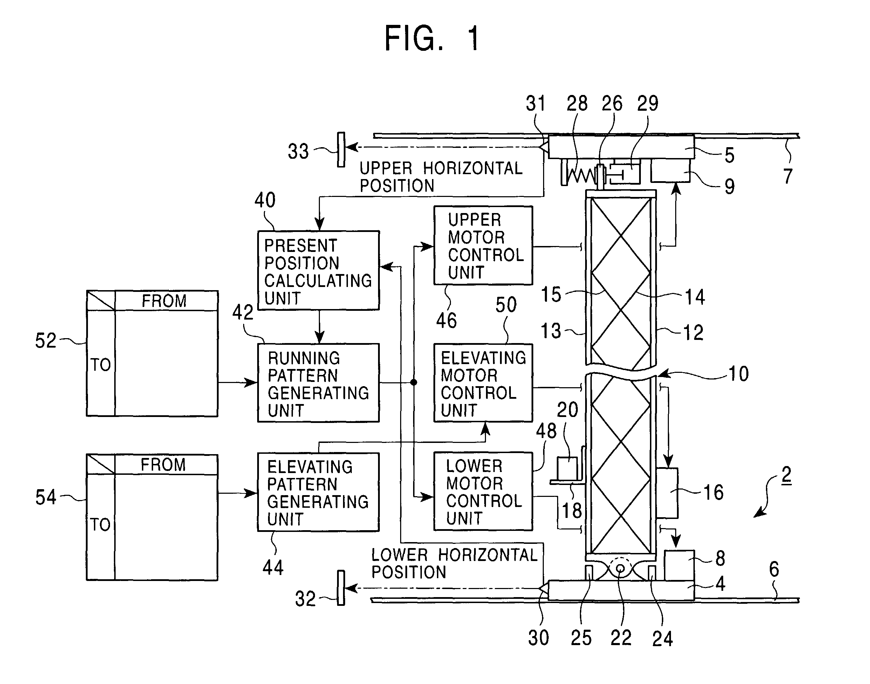

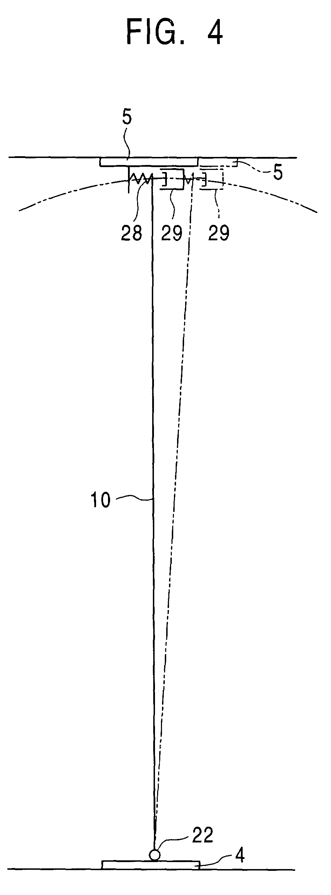

The embodiment is shown in Figure 1 through Figure 4. In these figures, 2 is a stacker crane, and for example, is used for the storing and the shipping of the articles at the automatic warehouse. 4 is a lower cart, 5 is an upper cart, and the lower cart 4 runs along a lower rail 6 laid on a floor face or the like of the automatic warehouse, and the upper cart 5 runs along an upper rail 7 laid on a ceiling or the like. The running motors 8, 9 are employed to each of the carts 4, 5. To facilitate the synchronized control against the lower cart 4 and the upper cart 5, the servomotor is adopted for the running motors 8, 9, but it can be of other motor such as a pulse motor.

10 is a truss structured mast and connects the lower cart 4 and the upper cart 5. 1, 2, 13 are columns, and a total of two columns 13 are employed along the depth direction of Figure 1. A total of three columns 12, 13 are joined by diagonal bracings 14, 15, to form the mast 10. 16 is an elevating motor, and 18 is an elevating platform which elevates and descends by loading an article 20, and transfers the article 20 between the station and the rack, by the slide fork or the like not shown in the drawings. A total of two columns 13 were employed in the embodiment, to attach the elevating rail of the elevating platform 18 to the column 13, and a mast of two columns or a mast of four columns can be adopted.

The lower edge of the mast 10 is attached to the lower cart 4 by a pin 22. Therefore, the mast 10 is capable of swinging in the running direction to the lower cart 4. Moreover, the swinging range of the mast 10 is limited by limiters 24, 25 employed in the lower cart 4. The upper part of the mast 10 is, for example, attached to a vertical moving plate 26 employed in the mast 10, and for example, the tip of a spring 28 and a damper 29 employed in the upper cart 5 are attached capable of swinging vertically against the vertical moving plate 26. The vertical moving plate 26 is contacted only against the spring 28 and the damper 29. Therefore, the vertical moving plate 26 is capable of swinging in the running direction to the upper cart 5. The spring 28 and the damper 29 damp the vibration resulting from the displacement, in the case the displacement of the upper cart 5 and the lower cart 4 occurs along the running direction. The spring 28 can be not employed and the damper 29 is to be a hydraulic damper, for example.

According to the embodiment, the mast 10 is connected to the lower cart 4 by the pin 22, and is attached to the upper cart 5 via the vertical moving plate 26, capable of swinging in the running direction, and shifting in the lower direction. However, the attachment can be reversed, the mast 10 can be attached to the upper cart 5 by the pin, capable of swinging, and can be attached to the lower cart 4, capable of swinging in the running direction and elevating. Moreover, in the embodiment, the vertical moving plate 26 is attached to the mast 10, and the spring 28 and the damper 29 are attached to the upper cart 5. However, the attachment can be reversed, and the vertical moving plate 26 can be attached to the upper cart 5, the spring 28 or the damper 29 can be attached to the mast 10. The limiters 24, 25 can be replaced with other means if the means controls the swinging range of the mast 10. For example, the limiters 24, 25 can be employed by extending the roller from the mast 10 to be positioned above the frame of the upper cart 5, and when swings a designated angle, the roller contacts against the frame of the upper cart 5 and it can be made not to swing any further.

The position sensor such as the laser range finders 30, 31 is employed to each of the lower cart 4 and the upper cart 5, and the position on the running rails 6, 7 are determined independently. 32, 33 are reflecting plates, and the laser range finders 30, 31 determine the present positions of the lower cart 4 and the upper cart 5, by determining the distance between the reflecting plates 32, 33. The horizontal position or the horizontal direction speed of the lower cart 4 determined by the laser range finder 30, and the horizontal position or the horizontal direction speed of the upper cart 5 determined by the laser range finder 31, are input to a present position calculating unit 40.

A running speed pattern generating unit 42 generates the running speed pattern from the departing position (From) to the destination (To) of the stacker crane 2, and compares the speed or the present position of each of the lower cart 4 and the upper cart 5 determined by the present position calculating unit 40, with the running speed pattern. The running speed pattern generating unit 42 resolves the differences in the position or the speed between the lower cart 4 and the upper cart 5, and controls so that the position or the speed of the lower cart 4 and the upper cart 5 coincide with the running speed pattern. The running speed pattern generating unit 42 controls an upper motor control unit 46 or a lower motor control unit 48, and these control units 46, 48 controls the running motors 8, 9, by the PID control or the like. An elevating speed pattern generating unit 44 generates the elevating speed pattern of the elevating platform 18 from the departing position (From) to the destination (To), and by comparing the present position or the speed of the elevating platform 18 with the position or the speed in the elevating speed pattern, controls the elevating motor 16 via an elevating motor control unit 50.

The running speed pattern of the lower cart 4 and the upper cart 5 are the same. This signifies the synchronized control to the running motors 8, 9 wherein the lower cart 4 and the upper cart 5 overlap on the vertical line, and both the speed and the position are to become equal. Moreover, in the running speed pattern, the acceleration or deceleration of the carts 4, 5 are determined in consideration to the balance of the load between the running motors 8, 9, and the output torque of the running motor of which the load is relatively large, is made to meet the prescribed limit. For example, the running motors 8, 9 are to be motors of the same output torque, the lower cart 4 handles the driving of the lower half of the mast 10, and the upper cart 5 is to handle the driving of the upper half of the mast 10. If the elevating platform 18 is located in the upper part than the center of the mast 10, the load of the running motor 9 of the upper cart 5 side increases, and if the elevating platform 18 is located in the lower part, the load of the running motor 8 of the lower cart 4 side increases. Therefore, the acceleration or deceleration is determined based on the running motor of the large load side. For example, the acceleration or deceleration is determined so that the output of the running motor of the large load side, meets the required condition. Further, there is no need to make the rated output torque of the upper and the lower running motors 8, 9 to be equal, and in the case the rated output torque ratio is not 1:1, the ratio of bearing the torque necessary for the acceleration or deceleration of the mast 10 becomes larger than 1/2 in the running motor of which the rated output torque is larger.

The output torque of the running motor of which the load is relatively high, determines the acceleration or deceleration so that the prescribed condition is to be met. As a result, a maximum acceleration or deceleration can be earned within the range of the ability of the running motors 8, 9. Next, when the elevating platform 18 is located in proximity to a position where the load to the lower running motor 8 and the upper running motor 9 balance, the acceleration or deceleration of the large running can be earned. On the other hand, when the elevating platform 18 leans toward the either of the vertical direction, the load of the one of the motors increases, and as a result, the running acceleration or deceleration of the stacker crane 2 is required to be reduced accordingly. Therefore, while the running motors 8, 9 accelerate or decelerate the stacker crane 2, it is preferable for the elevating platform 18 to be located in proximity to the position where the load to the lower running motor 8 and the upper running motor 9 is balanced. Thus, in the case the elevating platform 18 moves from the position where the load to the lower running motor 8 and the upper running motor 9 are balanced to the unbalanced position, when the elevating time of the elevating platform 18 is shorter than the running time, the start of the elevating and descending of the elevating platform 18 is to be delayed and the acceleration or deceleration of the running is to be made large.

As described above, the following two factors are included in the running speed pattern or the elevating speed pattern:
determining the acceleration or deceleration based on the running motor with large load adjusting the start time of the elevating or descending of the elevating platform 18, so that the load to the upper cart and the lower cart is to be equal.

The running speed pattern or the elevating speed pattern can be determined by calculating the most appropriate speed pattern, each time the stacker carne is ran.

According to the embodiment, to generate the running speed pattern or the elevating speed pattern easily, a running speed pattern memory 52 and an elevating speed pattern memory 54 are employed, and the running speed pattern and the elevating speed pattern are stored per a combination of the departing position and the destination. These memories 52, 54 store the two-dimensional reference listing of the departing position and the destination, and when referring according to the departing position and the destination, the running speed pattern and the elevating speed pattern can be read out. If constructed likewise, there is no need to calculate the running speed pattern or the elevating speed pattern separately, each time the stacker crane 2 runs. In the case of changing the running speed pattern or the elevating speed pattern, the data of the memories 52, 54 can be revised, thus the revising of the speed pattern is easy.

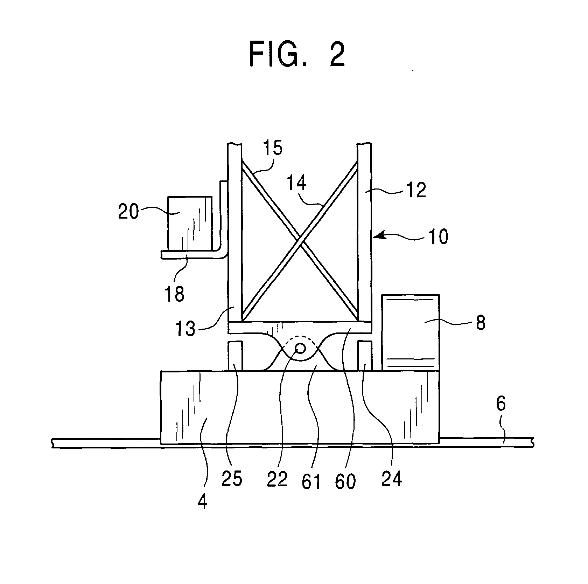

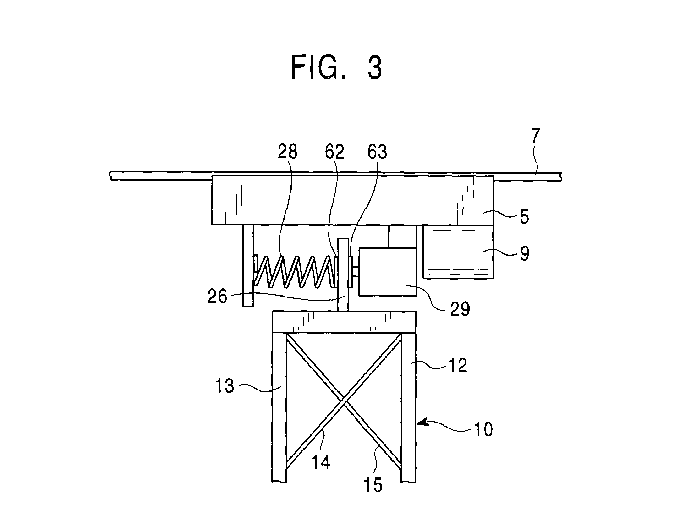

Figure 2 through Figure 4 shows the movement of the case in which the position along the running direction of the lower cart 4 and the upper cart 5 is displaced from the vertical line. As shown in Figure 2, a connection member 60 is employed in the bottom of the mast 10, and is connected, capable of swinging, to a connection member 61 of the lower cart 4 side, by the pin 22. Moreover, as shown in Figure 3, in the upper part of the mast 10, a contacting plate 62 of the tip of the spring 28 or a contacting plate 63 of the tip of the damper 29 are contacted against the vertical moving plate 26. When the mast 10 swings in front and back of the running direction, the vertical moving plate 26 shifts against the upper cart 5 in the lower direction, so that the contacting plates 62, 63 relatively abrade against the vertical moving plate 26. According to the embodiment, the spring 28 was employed to one of the vertical moving plate 26 and the damper 29 to the other, however, a set of the spring 28 and the damper 29 can be employed to both the front and the back of the vertical moving plate 26.

Due to some reasons, when the position of the running direction of the lower cart 4 and the upper cart 5 is relatively displaced from the vertical line, the mast 10 swings in front and back of the running direction with the pin 22 as the center, and the swinging range is to be limited by the limiters 24, 25. When the mast 10 swings, the height of the vertical moving plate 26 to the upper cart 5 decreases, and the contacting plates 62, 63 abrade in the lower direction to the vertical moving plates 26. Moreover, the vibration accompanying the displacement of the running direction position of the lower cart 4 and the upper cart 5, is absorbed by the spring 28 and the damper 29. As a result, even in the case the lower cart 4 and the upper cart 5 are displaced from the position overlapping to the vertical direction along the running direction, a strong force is not applied to the connection between the carts 4, 5 and the mast 10, and the damaging of the connection can be prevented. As a result, the height of the mast 10 can be made tall.

Returning to Figure 1, the synchronized control of the lower cart 4 and the upper cart 5 will be described. The position of the lower cart 4 and the upper cart 5 are determined by the laser range finders 30, 31, and the control is applied to the running motors 8, 9 so that these distances equal to each other.

Moreover, the running motors 8,9 are driven with the acceleration or deceleration fixed based on the motor of which the load is large. Thus, the carts 4, 5 are capable of running at the largest acceleration or deceleration within the range of the motors 8, 9. Furthermore, in the case the elevating platform 18 moves from a position where the load to the lower running motor 8 and the upper running motor 9 are balanced to an unbalanced position, when the elevating or descending time is shorter than the running time, the start of the elevating or descending of the elevating platform 18 is delayed. As a result, the time of the running by large acceleration or deceleration is lengthened, and the running time can be shortened.

According to the embodiment, since the running motors are employed to each of the upper cart and the lower cart respectively, the stacker crane can run at a high speed. Moreover, the upper cart and the lower cart can apply force so that only the self-handling part of the mast accelerates or decelerates. Furthermore, the mast is a truss structured mast and light weighted, and is not made to convey the traction from the lower cart to the upper cart, thus the rigidity can be low. Due to these reasons, the weight of the mast can be reduced and the running motor can also be miniaturized.

When the position along the running direction of the upper cart and the lower cart are displaced, in the case the mast is attached to the cart firmly, a strong force is applied to the combining section. However, according to the embodiment, the mast is connected to the lower cart by a pin and the mast is connected to the upper cart capable of shifting in the lower direction. Therefore, even when the upper cart and the lower cart are displaced from the synchronized control, no extra force is applied to the connection between the mast and the cart. In the running control of the stacker crane, the acceleration or deceleration is determined based on the running motor of which the load is relatively large. Thus, within the ability of the running motor, running at the highest acceleration or highest deceleration can be carried out.

Moreover, since the start of the elevating or descending of the elevating platform is controlled so that the acceleration or deceleration of the running is to be large, running can be carried out at an even higher acceleration or higher deceleration. As a result, a stacker crane wherein high speed running can be carried out, the weight is reduced, and the height of the mast is tall, can be provided.

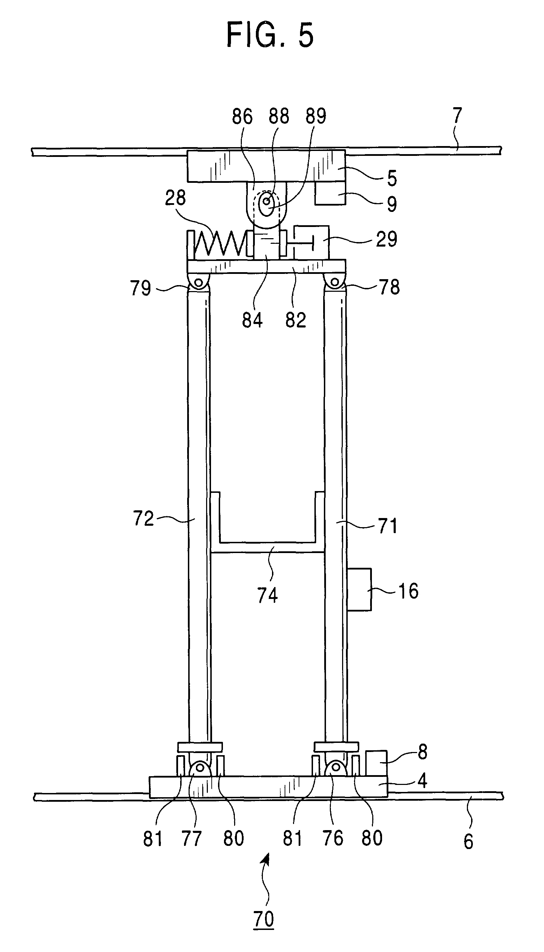

Figure 5 shows the second embodiment, the code numbers of the same numbers of Figure 1 through Figure 4 signify the same, and other than the points especially pointed out, it will be the same as the embodiment of Figure 1 through Figure 4.

70 is a stacker crane, 71, 72 are two columned mast, employed in the front and the back of the running direction of the carts 4, 5, and it can be a pipe-type mast as shown in the drawings, or can be a truss-type mast. 74 is an elevating platform elevating or descending between the mast 71 and the mast 72, and 76 through 79 are connecting parts capable of swinging wherein the pin or the like is adopted. The masts 71, 72 are connected capable of swinging to the lower cart 4 by the connecting parts 76, 77 and are connected capable of swinging to the upper cart 5 by the connecting parts 78, 79. 80, 81 are limiters to limit the swinging range of the masts 71, 72, and can be employed to the upper plate 82 side.

84 is an abrading plate attached capable of abrading, to the upper plate 82, and a spring 28 and a damper 29 are attached thereon. 86 is a connecting part between the upper cart 5 and the abrading plate 84, the pin 88 is held by a floating hole 89, and the abrading plate 84 is made capable of shifting in the lower direction against the upper cart 5. Further, the spring 28, the damper 29 and the abrading plate 84 can be not employed, for example, the pin 88 can be employed to the upper plate 82, and by making the floating hole 89 of the connecting part 86 to support, can be attached to the connecting part 86.

Also in this embodiment, the displacement in the vertical direction between the lower cart 4 and the upper cart 5 is absorbed by swinging the masts 71, 72, at the connecting parts 76 through 79, against the lower cart 4 and the upper cart 5. Moreover, when the height of the upper plate 82 is lowered, accompanying to the swinging of the masts 71, 72, the displacement is absorbed by the pin 88 descending inside the floating hole 89. Furthermore, the spring 28 and the damper 29 damp the vibration of the masts 71, 72, or the like. As a result, for example, high speed and high accelerated or decelerated running, the reducing of the weight or the enlarging of the masts 71, 72, the miniaturizing of the running motors of the each of the the lower cart 4 and the upper cart 5 can be carried out, and no excess force is applied to the connections between the masts 71, 72 and the carts 4, 5.

The above described and illustrated stacker crane disclosed in Japanese Patent Application No. 2000-301705 filed with the Japanese Patent Office on October 2, 2000 and the subject application claims the priority of the above Japanese Patent Application, the entire disclosure of which is incorporated herein by reference.

## Claims

1. A stacker crane wherein a mast is connected between an upper cart and a lower cart, **characterized in that**:
the stacker crane has a running motor provided to each of the upper cart and the lower cart, the running motor is controlled in synchronism so that the position of the upper cart and the lower cart are to overlap each other along the vertical direction, and the mast is attached freely swinging to the one of the upper cart and the lower cart in the running direction, and the mast is attached freely swinging in the running direction and freely shifting in the vertical direction to the other cart.

2. A stacker crane according to claim 1 wherein the mast is formed by a truss structured mast.

3. A stacker crane according to claim 1 or claim 2 wherein a damper is employed to a connection between the other cart and a mast.
